# EUROPÄISCHE PATENTSCHRIFT

(11) **EP 0 747 603 B1**
(45) Veröffentlichungstag und Bekanntmachung des Hinweises auf die Patenterteilung: **22.12.1999**
(21) Anmeldenummer: 96109103.0
(22) Anmeldetag: 06.06.1996
(51) Int. Cl.: F16B 7/18, F16B 12/50

(54) **Plattenverbinder**
Panel joint
Assemblage pour panneaux

(30) Priorität: 08.06.1995 DE 19520892
(43) Veröffentlichungstag der Anmeldung: 11.12.1996
(73) Patentinhaber: HERON Sondermaschinen und Steuerungen GmbH, 6890 Lustenau (DE)
(72) Erfinder: Kohler, Dietmar, 6890 Lustenau (AT)
(74) Vertreter: Riebling, Peter, Dr.-Ing.

(56) Entgegenhaltungen:
- EP-A- 0 616 134
- DE-A- 4 244 396
- DE-U- 8 624 567
- DE-U- 9 013 802
- US-A- 3 879 017

## Beschreibung

Gegenstand der vorliegenden Erfindung ist ein Plattenverbinder nach dem Oberbegriff des Anspruchs 1. Derartige Plattenverbinder werden benötigt, um Profile, die in der Regel rechteckig aufgebaut sind und an den Seiten über Längsnuten und in der Mitte über eine oder mehrere Mittelbohrungen verfügen, miteinander rechtwinklig zu verbinden.

Es ist hierbei aus dem Stand der Technik eine Vielzahl von Ausführungsformen bekanntgeworden, die allerdings sämtlich den wesentlichen Nachteil aufweisen, daß eine zuverlässige Zentrierung der Nuten der einzelnen, miteinander verbundenen Profile zueinander nicht gewährleistet werden kann.

Die DE 42 44 396 A zeigt nämlich insbesondere in Figur 3 bereits ein Verbindungsstück 31, das an seiner Oberseite Zentrierstücke 34 und 35 und an seiner Unterseite einen zur Zentrierung dienenden Ansatz 43 aufweist. Diese Zentrieransätze der DE 42 44 396 A sind allerdings vollständig starr und materialeinstückig mit dem Verbindungsstück 31 ausgebildet.

Diese starre Ausbildung der Zentrieransätze bedeutet, dass sowohl bei der Fertigung der Profile bzw. deren Nuten als auch bei der Herstellung der Zentrieransätze mit sehr hoher Genauigkeit gearbeitet werden muss. Andernfalls lässt sich nämlich eine zuverlässige Zentrierung nicht erreichen.

Aufgabe der Erfindung ist es, eine wesentlich kostengünstigere Herstellung zu ermöglichen; gleichzeitig den Zusammenbau genauer zu erfolgen.

Erfindungsgemäß wird diese Aufgabe durch die technische lehre des Anspruchs 1 gelöst.

Es ist dabei wesentlich, die Zentrieransätze materialgetrennt von dem Plattenverbinder auszubilden und aufzuspreizen.

Durch das materialgetrennte Ausbilden wird die Herstellung des Plattenverbinders sowie der Zentrieransätze erleichtert. Die Zentriereinsätze selbst spreizen sich dann beim Zusammenschrauben auf und legen sich an den zugeordneten Anschlagflächen an. Dies bedeutet, dass geringe Variationen in der Breite der Nut sowie in den Abmessungen der Zentriereinsätze nicht mehr von Bedeutung sind, da diese Variationen durch das Aufspreizen ausgeglichen werden können.

Es ist selbstverständlich ebenfalls möglich, diese Zentrieransätze nicht fest am Plattenverbinder anzubringen, sondern in Form geeigneter Zentriereinsätze auszubilden. Zu diesem Zweck ist dann in den Plattenverbindern eine entsprechende Ausnehmung vorgesehen, in der der jeweilige Zentriereinsatz eingesetzt wird.

Es ist dann möglich, entweder an beiden Seiten des Plattenverbinders fest angebrachte Ansätze vorzusehen, an beiden Seiten Zentriereinsätze oder an einer Seite einen Zentriereinsatz und an der anderen Seite einen fest angebrachten Zentrieransatz.

Die Zentriereinsätze sind hierbei in einer besonderen Ausführungsform so ausgebildet, daß sie beim Fixieren des Plattenverbinders aufgespreizt werden. Es kommt hierdurch zu einer völlig spielfreien Anlage dieser Zentriereinsätze in der jeweiligen Nut, so daß eine tadellose Lage der Nuten zueinander gewährleistet ist.

Ergänzend kann vorgesehen sein, die sich aufspreizenden Flächen konisch, gerade oder in anderer geeigneter Form auszubilden, um das Einführen der Zentriereinsätze in die jeweilige Nut zu erleichtern.

In einer bevorzugten Ausführungsform sind die sich aufspreizenden Flächen mit Zacken versehen. Diese Zacken graben sich beim Aufspreizen in das Material des jeweiligen Profils ein und zerstören die beispielsweise bei Aluminium vorhandene Oxidschicht an der Oberfläche. Sie kommen dann mit dem leitfähigen Aluminium in Kontakt, so daß durch die Einsätze auch ein zuverlässiger elektrischer Kontakt zwischen den einzelnen Profilen hergestellt werden kann.

Dies kann beispielsweise für besondere Einsatzzwecke erforderlich sein, wenn die gesamte Profilkonstruktion keinerlei Spannung aufweisen darf, z. B. bei Fertigung in der Elektronikindustrie. Die einzelnen Profile werden dann durch diese Zentriereinsätze zuverlässig leitend verbunden und können somit insgesamt auf Masse gelegt werden, so daß eine eventuell durch Reibung oder andere physikalische Vorgänge auf den Profilen entstandene Spannung zuverlässig abgeführt wird.

Um das Verbinden der einzelnen Profile zu erleichtern, ist in einer Weiterbildung der Erfindung vorgesehen, die Zentriereinsätze bzw. den Plattenverbinder selbst mit Anschlägen zum Begrenzen des Verschiebewegs der Einschwenkmuttern zu versehen. Es gab nämlich beim Stand der Technik relativ häufig das Problem, daß die Einschwenkmuttern in die Nut des ersten Profils eingesetzt worden sind und danach in dieser Nut verschoben worden sind. Wenn nun die Einschwenkmuttern zu weit verschoben werden, geraten sie unter das zweite, anzuschließende Profil. Sobald allerdings die Einschwenkmuttern unter das andere Profil gerutscht sind, muß dieses wieder abgenommen werden, um die Einschwenkmuttern wieder erreichen zu können.

Dieses zu weite Verschieben der Einschwenkmuttern wird durch diese Anschläge verhindert. Darüber hinaus sind die Anschläge und die Einschwenkmuttern so aufeinander abgestimmt, daß, sobald die Einschwenkmuttern sich an den Anschlägen angelegt haben, das Einbringen der Befestigungsschraube ohne weiteres erfolgen kann. Die entsprechende Bohrung in der Einschwenkmutter fluchtet dann nämlich mit der vorgesehenen Ausnehmung im Plattenverbinder.

Um die Flexibilität des Plattenverbinders zu erhöhen, ist in einer anderen Weiterbildung vorgesehen, zwei oder mehrere Plattenverbinder über einen geeigneten Verbinder zu koppeln. Diese Kopplung kann hierbei so stattfinden, daß die am Plattenverbinder angebrachten Zentrieranschläge jeweils an der schmalen Stirnseite oder an den Längsseiten der so entstandenen Kette aus Plattenverbindern angeordnet sind. Es sind selbstverständlich auch quadratische Formen, T-Formen, U-Formen, Quadrate mit einer Ausnehmung in der Mitte und dgl. möglich. Derartige Formen können z. B. erforderlich sein, um Profile unterschiedlicher Abmessungen miteinander zu verbinden oder für Spezialeinsätze.

Im folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Dabei zeigt:
- Figur 1:: Eine erste Ansicht einer Konstruktion mit einem Plattenverbinder in einer ersten Ausführungsform nach dem Stand der Technik.
- Figur 2:: Eine Ansicht gemäß Figur 1 in einer zweiten Ausführungsform;
- Figur 3:: Einen Querschnitt durch den Stoß zwischen zwei Profilen;
- Figur 4:: Eine dreidimensionale Darstellung des erfindungsgemäßen Zentriereinsatzes in einer ersten Ausführungsform;
- Figur 5:: Eine Ansicht gemäß Figur 4 in einer zweiten Ausführungsform;
- Figur 6:: Eine Schnittdarstellung im rechten Winkel zu Figur 3;
- Figuren 7-11:: Verschiedene Ausführungsformen für die Kopplung von Plattenverbinder;
- Figur 12:: Eine Ansicht gemäß Fig. 1 in einer weiteren Ausführungsform.

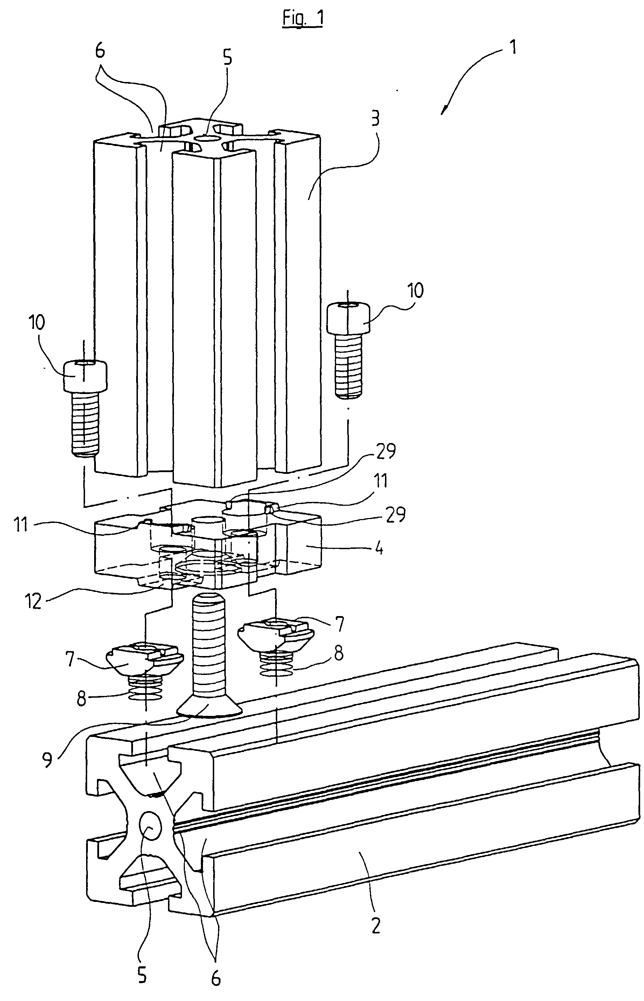

Gemäß den Figuren 1,2,12 ist eine Konstruktion 1 vorgesehen, bei der zwei Profile 2,3 miteinander über einen Plattenverbinder 4 gekoppelt werden sollen. Die Profile 2,3 weisen in der hier gezeigten Ausführungsform eine Mittelbohrung 5 sowie an jeder Längsseite eine Nut 6 auf. Es wird hierbei bevorzugt, wenn die Profile 2,3 quadratisch ausgebildet sind.

In die Nut 6 des ersten Profils 2 werden hierbei Einschwenkmuttern 7 eingesetzt, die über zusätzliche Federn 8 verschiebesicher in der Nut 6 gehalten werden können.

Der Plattenverbinder 4 selbst wird über eine Schraube 9, die eine entsprechende Ausnehmung des Plattenverbinders 4 durchgreift und in die Mittelbohrung 5 des Profils 3 eingesetzt wird, an diesem befestigt.

Die Zentrierung des Plattenverbinders erfolgt hierbei über Zentrieransätze 11, die in die Nuten 6 des Profils 3 eingreifen.

Die Zentrieransätze 11 weisen hierbei noch Vorsprünge 29 auf, die die Nut 6 des Profils 3 hintergreifen und somit eine Verschiebesicherung des Plattenverbinders 4 in einer Ebene senkrecht zur Mittelachse des Profils 3 zuverlässig ausschließen.

Das Profil 3 zusammen mit dem daran befestigten Plattenverbinder 4 wird danach auf das Profil 2 aufgesetzt und mittels Schrauben 10, die entsprechende Ausnehmungen im Plattenverbinder 4 durchgreifen, an den Einschwenkmuttern 7 befestigt. Die Profile 2,3 sind dann zuverlässig miteinander verbunden.

Um ein zuverlässiges Zentrieren des Plattenverbinders 4 auch an dem anderen Profil 2 zu erreichen, sind auch an dessen anderer Seite Zentrieransätze 12 vorgesehen, die im wesentlichen den Zentrieransätzen 11 gegenüberliegen. Diese Zentrieransätze 12 können zumindest teilweise konisch ausgebildet sein, um das Aufsetzen des Plattenverbinders 4 auf das Profil 2 zu erleichtern.

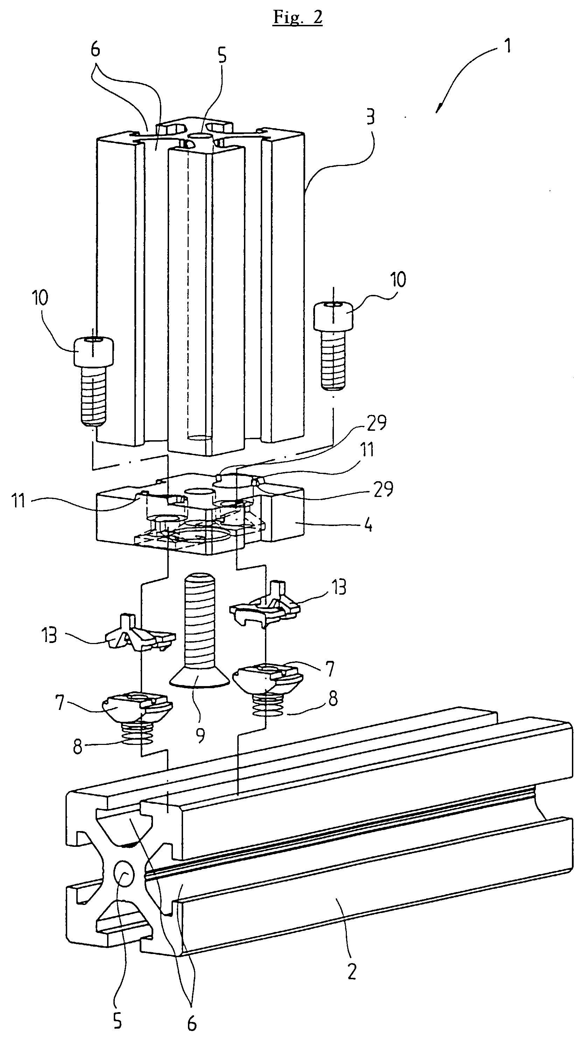

Figur 2 zeigt eine im wesentlichen ähnliche Ausführungsform, wobei allerdings anstelle der Zentrieransätze 12 getrennt vom Plattenverbinder 4 vorliegende Zentriereinsätze 13 zum Einsatz kommen.

In der Ausführungsform nach Fig. 12 ist dargestellt, daß die Zentriereinsätze 11 nicht zwingend einteilig ausgebildet sein müssen, sondern durchaus auch in getrennter Form vorliegen können. Es werden dann jeweils einzelne Vorsprünge für jede Seite einer Nut 6 verwendet. Die Zentrierwirkung wird hierdurch nicht beeinträchtigt.

Die Zentriereinsätze 11 nach Fig. 12 können hierbei auch so ausgebildet sein, daß sie vollständig in zusammengebautem Zustand in den Nuten 6 verschwinden, also von vorne nicht mehr sichtbar sind. Die Zentrierung erfolgt dann vollständig durch das Anlegen der Zentriereinsätze 11 an der Innenwand der jeweiligen Nut 6, bevorzugt in den der Profilaußenseite zugewandten Ecken der Nut 6.

Hierbei werden gleiche Bauteile mit gleichen Bezugszeichen bezeichnet, so daß für eine genauere Darstellung auf Figur 1 verwiesen werden kann.

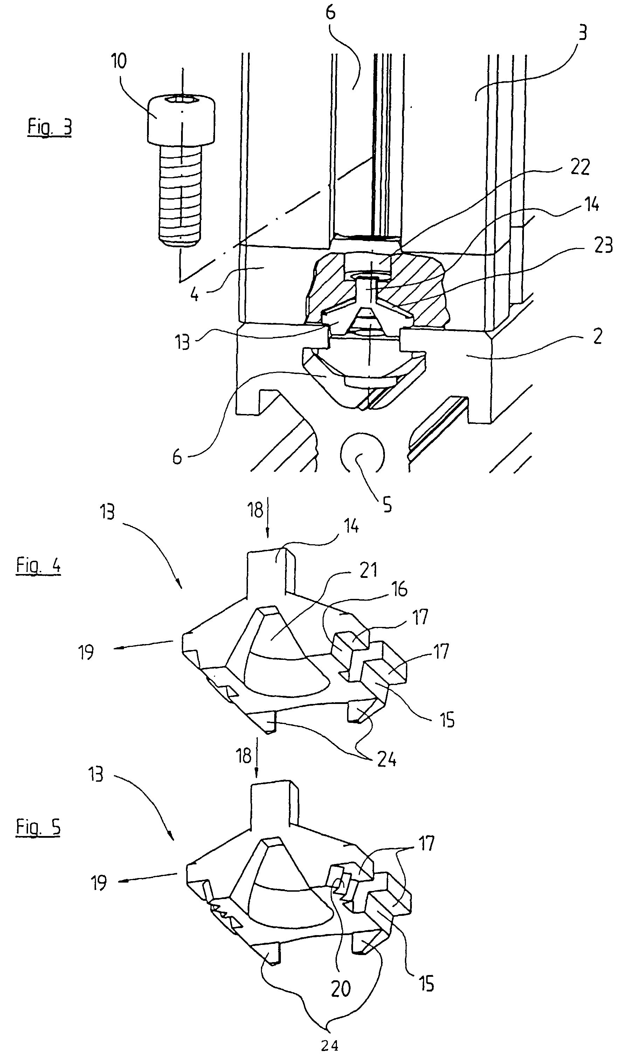

Die Figuren 3-5 zeigen eine teilweise Schnittdarstellung durch den Stoß zwischen den Profilen 2,3 sowie zwei Ausführungsformen des erfindungsgemäß vorgesehenen Zentriereinsatzes. Der Zentriereinsatz 13 ist hierbei in eine Ausnehmung 23 des Plattenverbinders 4 eingesetzt. Auf der gegenüberliegenden Seite ist am Plattenverbinder 4 eine weitere Ausnehmung 22 zur Aufnahme des Kopfes der Schraube 10 vorgesehen.

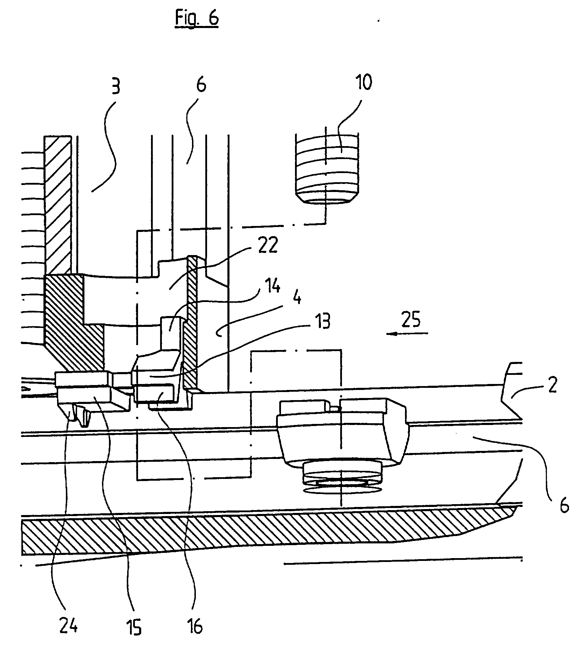

Der Zentriereinsatz 13 weist nun einen Kopf 14 auf, wobei der Zentriereinsatz 13 und die die Ausnehmungen 22,23 im Plattenverbinder 4 so aufeinander abgestimmt sind, daß dieser Kopf 14 etwas über die Grundfläche der Ausnehmung 22 hervorsteht. Beim Eindrehen der Schraube 10 wird somit eine Kraft in Pfeilrichtung 18 (Figur 4,5) auf den Kopf 14 ausgeübt, so daß der Zentriereinsatz 13 in Pfeilrichtung 19 und in Gegenrichtung hierzu aufgespreizt wird.

Der Zentriereinsatz 13 selbst in den Figuren 4,5 näher dargestellt. Wesentlich hierbei ist, daß der Zentriereinsatz 13 Auflageflächen 17 aufweist, mit denen er sich an der Oberseite des jeweiligen Profils 2 abstützen kann. Nur aufgrund dieses Abstützens ist überhaupt ein Aufspreizen des Zentriereinsatzes 13 möglich.

Es sind dann hintere und vordere Anschlagflächen 15,16 vorgesehen, die jeweils in die Nut 6 des Profils 2 eingreifen. Es wird hierbei bevorzugt, wenn die hinteren Anschlagflächen 15 feststehend ausgebildet sind und nicht aufgespreizt werden, während die vorderen Anschlagflächen 16 aufgespreizt werden.

Selbstverständlich können diese Anschlagflächen 15,16 konisch ausgebildet sein, ballig ausgebildet oder in anderer geeigneter Form.

Figur 5 zeigt eine besondere Ausführungsform der vorderen Anschlagflächen 16 in Form von Zacken 20. Wie bereits im allgemeinen Teil der Beschreibung geschildert, durchbohren diese Zacken 20 beim Aufspreizen in Pfeilrichtung 19 und in Gegenrichtung hierzu die auf der Oberfläche von Aluminium vorhandene Oxidschicht und stellen somit einen leitenden Kontakt mit dem Profil 2 her.

Die Profile 2,3 sind hierbei in der Regel aus eloxiertem Aluminium hergestellt, während die Zentriereinsätze 13 beispielsweise aus Zinkguß, Stahlfeinguß oder einem ähnlichen Material hergestellt sind, das eine größere Härte als die Eloxidschicht auf dem Aluminium aufweist. Der Plattenverbinder ist ebenfalls bevorzugt aus Zinkdruckguß hergestellt, wobei auch hier andere geeignete Materialien zum Einsatz kommen können.

Um das Durchgreifen der Schraube 10 durch den Zentriereinsatz 13 zu ermöglichen, ist eine Ausnehmung 21 vorgesehen.

Unter Bezugnahme auf die Figuren 4-6 wird die Anschlagwirkung geschildert. In der hier gezeigten Ausführungsform ist der Zentriereinsatz 13 mit einem oder mehreren Anschlägen 24 versehen. Diese Anschläge 24 können ebenfalls leicht konisch ausgebildet sein, um eine Vorzentrierung in der Nut 6 des jeweiligen Profils 2,3 zu erreichen. Wird nun eine Einschwenkmutter 7 in Pfeilrichtung 25 (Figur 6) eingeschoben, so legt sie sich mit ihrer Seitenfläche an den Anschlägen 24 an und ist dann zuverlässig in dieser Stellung mit Hilfe der Feder gehalten. Das Einsetzen und Einschrauben der Schraube 10 in die Einschwenkmutter 7 ist dann ohne Probleme machbar.

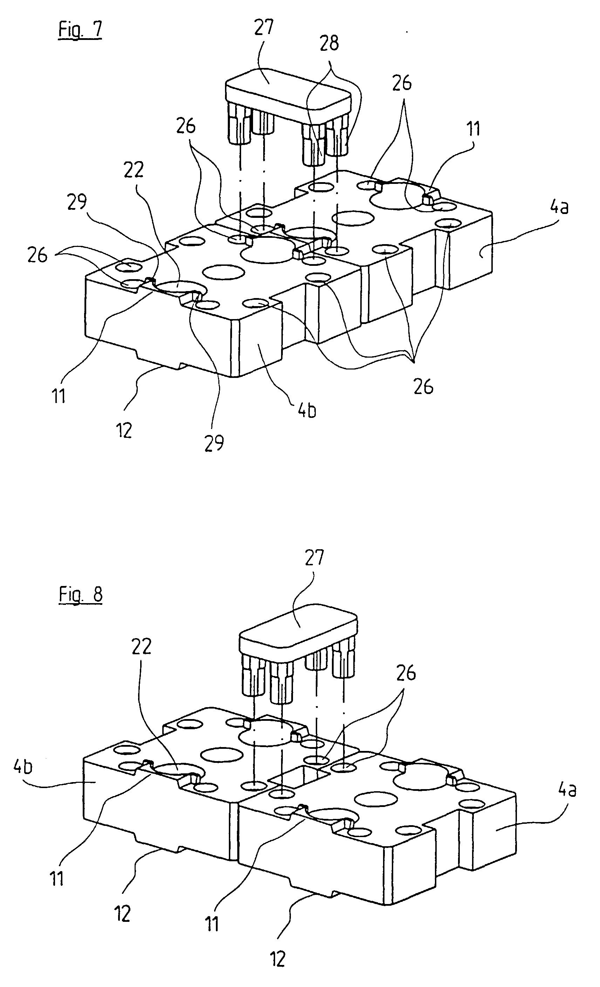

Gemäß den Figuren 7-11 können auch mehrere Plattenverbinder 4,4a,4b miteinander gekoppelt werden. Figur 7 zeigt eine erste Ausführungsform, bei der die an den Plattenverbindern 4a,4b vorhandenen Zentrieransätze 11,12 jeweils an der schmalen Stirnseite der so entstehenden Konstruktion angeordnet sind. Hierbei sind die Plattenverbinder 4,4a,4b mit mehreren Bohrungen 26 versehen, in die ein geeignetes Verbindungselement 27 mit zugeordneten Zapfen 28 eingesetzt wird. Es kann hierbei vorgesehen sein, den Durchmesser der Bohrungen 26 und der Zapfen 27 so aufeinander abzustimmen, daß der Verbinder 27 eingeschlagen werden muß. Selbstverständlich ist es aber auch möglich, hier aufspreizbare Zapfen, z. B. über einen Gewindestift oder dgl. zu wählen.

Wesentlich hierbei ist, daß der Verbinder 27 lediglich zur lagerichtigen Fixierung der Plattenverbinder 4,4a,4b dient. Im eingebauten Zustand wird vom Verbinder 27 keine Kraft mehr übertragen. Es können daher auch einfache Stahlfedern, Klammern oder andere geeignete Mittel zum Einsatz kommen. Es ist somit ebenfalls möglich, mehrere Plattenverbinder 4 ohne derartige Verbinder 27 gemeinsam einzubauen.

Es ist wichtig, daß die Bohrungen 26 der Plattenverbinder 4,4a,4b gleichmäßig über die Oberfläche dieser Plattenverbinder verteilt sind. So können dann die Plattenverbinder in praktisch jeder beliebigen Stellung zueinander angeordnet werden.

Figur 8 zeigt eine ähnliche Ausführungsform wie Figur 7, wobei allerdings die Plattenverbinder 4a,4b jeweils um 90° gedreht sind. Die Zentrieransätze 11,12 befinden sich dann an der Längsseite des so entstehenden Rechtecks.

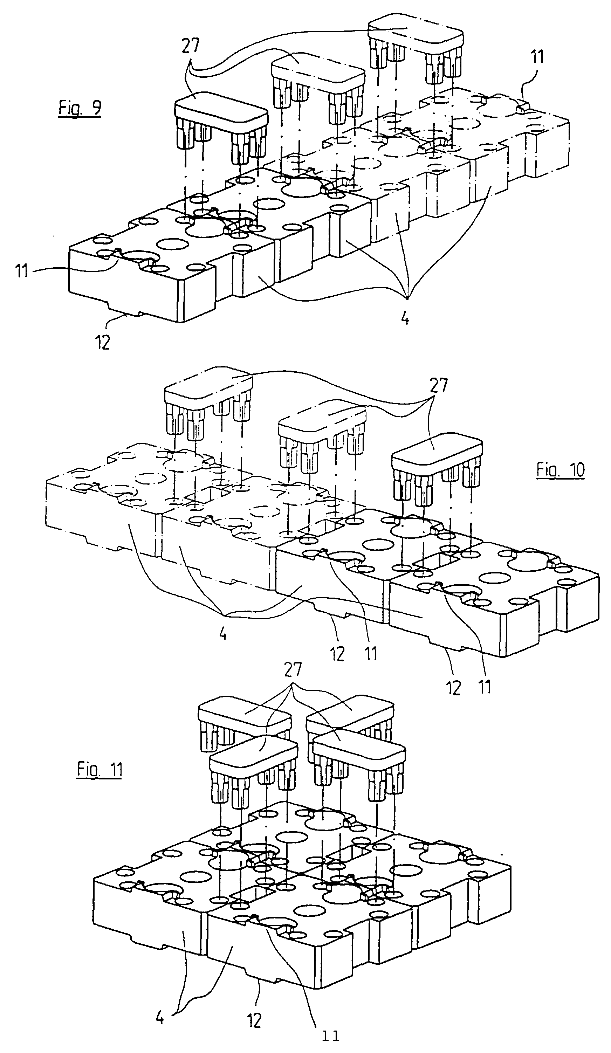

In den Figuren 9 und 10, die im wesentlichen ähnliche Ausführungsbeispiele wie die Figuren 7 und 8 zeigen, ist dargestellt, daß selbstverständlich auch die Verbindung von mehr als zwei Plattenverbindern 4,4a,4b möglich ist.

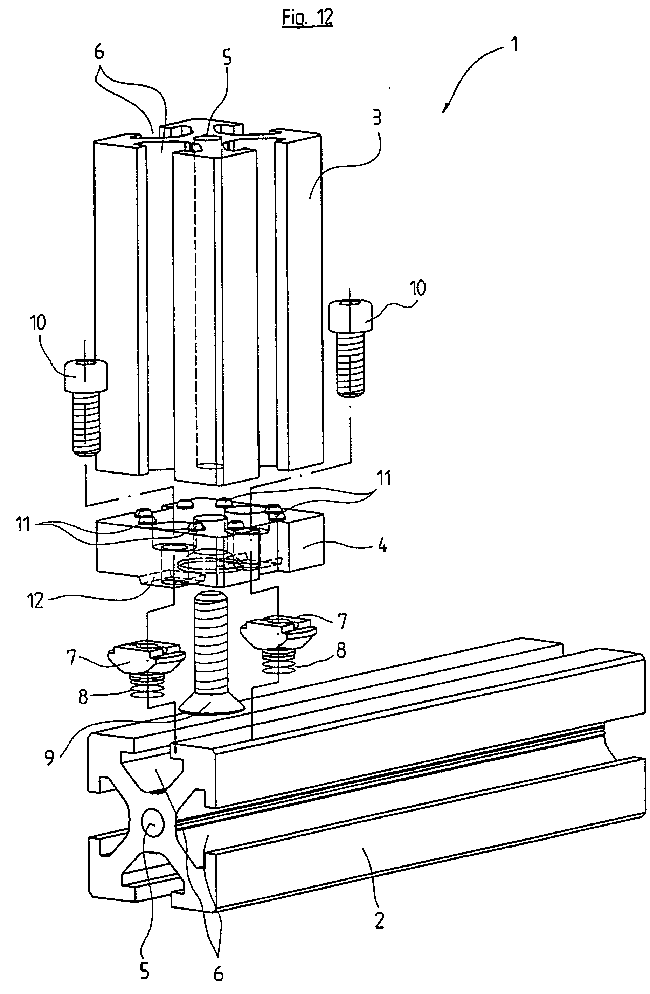

Figur 11 zeigt eine besondere Einsatzform, bei der aus vier Plattenverbindern 4 ein neues, größeres Quadrat gebildet wird.

Insgesamt ergibt sich mit dem Gegenstand der vorliegenden Erfindung eine zuverlässige Fixierung von zwei Profilen zueinander. Insbesondere die Lage der Nuten der Profile zueinander wird durch die Zentrieransätze bzw. durch die erfindungsgemäß ebenfalls vorgeschlagenen Zentriereinsätze gewährleistet. Gleichzeitig wird ein hochflexibles Baukastensystem bereitgestellt, das an verschiedenste Anforderungen angepaßt werden kann.

Es wird hierbei bevorzugt, wenn der Plattenverbinder 4 an den Querschnitt der jeweils verwendeten Profile 2,3 angepaßt ist. Insbesondere in zusammengebautem Zustand soll der Plattenverbinder 4 nicht seitlich über das jeweils verwendete Profil 2,3 vorstehen oder ihm gegenüber zurückgesetzt sei. Dies bedeutet, daß die Gesamtabmessungen des Plattenverbinders 4 im wesentlichen mit denen der verwendeten Profile 2,3 übereinstimmen.

Dies ist zwar für die Funktionalität nicht zwingend erforderlich, führt aber zu einem befriedigten optischen Aussehen

### ZEICHNUNGSLEGENDE

- 1: Konstruktion
- 2: Profil
- 3: Profil
- 4: Plattenverbinder 4a,4b
- 5: Mittelbohrung
- 6: Nut
- 7: Einschwenkmutter
- 8: Feder
- 9: Schraube
- 10: Schraube
- 11: Zentrieransatz
- 12: Zentrieransatz
- 13: Zentriereinsatz
- 14: Kopf
- 15: Anschlagfläche (hinten)
- 16: Anschlagfläche (vorn)
- 17: Anschlagfläche
- 18: Pfeilrichtung
- 19: Pfeilrichtung
- 20: Zacke
- 21: Ausnehmung
- 22: Ausnehmung
- 23: Ausnehmung
- 24: Anschlag
- 25: Pfeilrichtung
- 26: Bohrung
- 27: Verbinder
- 28: Zapfen
- 29: Vorsprung

## Patentansprüche

1. Plattenverbinder zum Verbinden von zwei oder mehreren im wesentlichen senkrecht zueinander stehenden Profilen, wobei der Plattenverbinder an der Stirnseite des ersten Profils bzw. ersten Profilgruppe anbringbar ist und in einer Nut des zweiten Profils bzw. der zweiten Profilgruppe befestigbar ist, wobei der Plattenverbinder (4) Zentrierungen (11,12,13) aufweist, die in zusammengesetztem Zustand in den Nuten (6) der Profile (2,3) formschlüssig anlegbar sind, **dadurch gekennzeichnet,** dass die Zentrierungen zumindest teilweise in Form von materialgetrennten Zentriereinsätzen (13) ausgebildet sind und ein Aufspreizen der Zentriereinsätze (13) in zusammengebautem Zustand erfolgt.

2. Plattenverbinder nach Anspruch 1, **dadurch gekennzeichnet,** daß die aufgespreizten Flächen (16) der Zentriereinsätze (13) mit Zacken (20) versehen sind.

3. Plattenverbinder nach einem der Ansprüche 1 bis 2, **dadurch gekennzeichnet,** daß die Zentrierflächen (15,16) des Zentriereinsatzes (13) gerade, konisch, ballig oder in anderer Form ausgebildet sind.

4. Plattenverbinder nach einem der Ansprüche 1 bis 3, **dadurch gekennzeichnet,** daß Anschläge (24) zum begrenzen des Verschiebewegs von Einschwenkmuttern (7) vorgesehen sind.

5. Plattenverbinder nach einem der Ansprüche 1 bis 4, **dadurch gekennzeichnet,** daß mehrere Plattenverbinder (4,4a,4b) über einen oder mehrere Verbinder (27) miteinander koppelbar sind.

6. Plattenverbinder nach Anspruch 5, **dadurch gekennzeichnet**, daß die Verbindungseinrichtungen (26) rotationssymmetrisch auf den Plattenverbindern (4,4a,4b) angebracht sind.

7. Plattenverbinder nach Anspruch 5 oder 6, **dadurch gekennzeichnet,** daß der oder die Verbinder (27) zur Verbindung mehrerer Plattenverbinder (4,4a,4b) nach der Verbindung von entsprechenden Profilen (2,3) praktisch unbelastet sind.

## Claims

1. Plate connector for connecting two or more profile sections positioned substantially at right angles to one another, the plate connector being attachable on the end face of the first profile section or first group of profile sections and being fastenable in a groove of the second profile section or of the second group of profile sections, wherein the plate connector (4) has centring means (11, 12, 13) which in the assembled state are arrangable in form-locking manner in the grooves (6) of the profile sections (2, 3), characterised in that the centring means are constructed at least in part in the form of materially separate centring inserts (13) and opening out of the centring inserts (13) occurs in the assembled state.

2. Plate connector according to Claim 1, characterised in that the spread-open surfaces (16) of the centring inserts (13) are provided with serrations (20).

3. Plate connector according to one of Claims 1 to 2, characterised in that the centring surfaces (15, 16) of the centring insert (13) are of straight, conical, spherical or other construction.

4. Plate connector according to one of Claims 1 to 3, characterised in that stops (24) are provided for limiting the path of displacement of swivel nuts (7).

5. Plate connector according to one of Claims 1 to 4, characterised in that several plate connectors (4, 4a, 4b) are linkable to one another via one or more connectors (27).

6. Plate connector according to Claim 5, characterised in that the connection devices (26) are attached to the plate connectors (4, 4a, 4b) in rotationally symmetrical manner.

7. Plate connector according to Claim 5 or 6, characterised in that the connector or connectors (27) for connecting several plate connectors (4, 4a, 4b) are practically free of load after the connection of corresponding profile sections (2, 3).

## Revendications

1. Elément de liaison en forme de plaque pour relier au moins deux profilés placés globalement perpendiculairement l'un par rapport à l'autre, étant précisé que cet élément de liaison (4) est apte à être posé sur le côté frontal du premier profilé ou du premier groupe de profilés et à être fixé dans une rainure du second profilé ou du second groupe de profilés, et qu'il comporte des organes de centrage (11, 12, 13) qui sont aptes à être appliqués par complémentarité de forme dans les rainures (6) des profilés (2, 3), en position de montage, **caractérisé** en ce que les organes de centrage sont conçus au moins en partie comme des pièces intercalaires non solidaires (13) et un écartement des pièces intercalaires (13) a lieu en position de montage.

2. Elément de liaison en forme de plaque selon la revendication 1, **caractérisé** en ce que les surfaces écartées (16) des pièces intercalaires de centrage (13) sont pourvues de dents (20).

3. Elément de liaison en forme de plaque selon la revendication 1 ou 2, **caractérisé** en ce que les surfaces de centrage (15, 16) de la pièce intercalaire de centrage (13) ont une forme droite, conique, bombée ou autre.

4. Elément de liaison en forme de plaque selon l'une des revendications 1 à 3, **caractérisé** en ce que des butées (24) sont prévues pour limiter la course de déplacement d'écrous escamotables (7).

5. Elément de liaison en forme de plaque selon l'une des revendications 1 à 4, **caractérisé** en ce que plusieurs éléments de liaison de plaque (4, 4a, 4b) sont aptes à être reliés par l'intermédiaire d'un ou plusieurs éléments de liaison (27).

6. Elément de liaison en forme de plaque selon la revendication 5, **caractérisé** en ce que les dispositifs de liaison (27) sont prévus de manière symétrique en rotation sur les éléments de liaison en forme de plaques (4, 4a, 4b).

7. Elément de liaison en forme de plaque selon la revendication 5 ou 6, **caractérisé** en ce que le ou les éléments de liaison (27) destinés à relier plusieurs éléments de liaison en forme de plaques (4, 4a, 4b) sont pratiquement non contraints une fois que la liaison est réalisée entre les profilés correspondants (2, 3).
